# EUROPEAN PATENT APPLICATION

(11) **EP 1 795 927 A1**
(43) Date of publication of application: **13.06.2007**
(21) Application number: 05397023.2
(22) Date of filing: 07.12.2005
(51) Int. Cl.: G02B 6/25, G02B 6/26

(54) **A method for patterning an optical element**

(71) Applicant: Optoelectronics Research Centre, 33101 Tampere (FI)
(72) Inventor: Viheriälä, Jukka, 33720, Tampere (FI); Niemi, Tapio, 33900, Tampere (FI); Pessa, Markus, 33560, Tampere (FI)
(74) Representative: Pursiainen, Timo Pekka

(57) **Abstract**

The invention is a method for producing an optical field modifying element (9). Optical field modifying element can be on or combined with an optical element (1) such as, a optical fibre, an optical waveguide, or a light emitting device such as a light emitting diode, etc. In the method optical field modifying element (9) having a micro- and/or nano- pattern is formed on the facet of optical element (1c). Optical field modifying element (9) can be, for example, diffractive element, lens, metal relief, artificial material. The method comprises heating the optical element (1); pressing an imprint stamp (2) having a surface pattern on a facet (1c) of the optical element (1) to form a negative pattern of the surface pattern of the imprinting stamp (2) on the facet (1c) of the optical element (1); and separating the imprint stamp (2) from the facet (1 c) of the optical element (1).

## Description

### Field of the Invention

The present invention relates to a method for producing an optical field modifying element having a micro- and/or nano- pattern on an optical element. The optical element is, for example, an optical fibre, an optical waveguide, or a light emitting device such as a light emitting diode (LED), etc.

### Background of the Invention

Optics is becoming a more and more important issue in modern technology. In communication systems, in which data transmission speed and transmission capacity often play an important role, optical transmission techniques are replacing traditional wired systems. Therefore, it is important to make the optical elements of the optical transmission systems as effective as possible.

Optical fibres have been used as optical signal carriers for many years and the properties of optical fibres have been improved last years. Optical fibres can be classified according to the fabrication material and also according to the mode of propagation of the optical signal in the optical fibre. Optical fibres can be based on either glass or polymer and the propagation of the light can be single-mode or multi-mode.

In a patent US 6,748,137 there is disclosed a lensed optical fibre for telecommunications applications. The purpose of the lens is to reduce back reflections to light source and improving the coupling of the light to the optical fibre. The lens is formed e.g. by grinding the end facet of the optical fibre to achieve the desired shape within strict limitations of fabrication technique. This kind of manufacturing process is, however, rather slow and it is not easily applicable for repetitively producing such optical fibres, for example for a mass production.

One of the critical points in optical systems is the interface between two optical elements. For example, when an optical transmitter e.g. a laser emits light, the emitted light should be coupled to an optical fibre with as little losses as possible. Such an interface, requires an element to improve coupling efficiency. Some efforts have been tried to increase coupling efficiency. For example, a grid or a lens has been formed at the end of a optical fibre or to another facet of a optical fibre. However, it is not easy to produce grids or other micro- and nano-patterns to a facet of a optical fibre due to *inter alia* the small dimensions of optical fibres.

There has also been attempts to fabricate nano- and micro-optical features on a facet of optical fibre but these techniques have been based on electron or ion beam lithography. These are very costly fabrication techniques. In addition, electron beam lithography is difficult to control when process is made on a facet of an optical fibre because requirements for uniformity of imaging resists are demanding.

Micro- and Nano-patterned surfaces on optical fibre facet can perform functions such as focusing, shaping and collimation of beam, improving fibre coupling, reduce reflections originating from refractive index difference between fibre and surrounding media, polarization dependent element, nonlinear optical element, spectral filtering element or element modifying beam in a way that beam is more decorative than without element. It is also easier design beam modifying optical element and achieve new functionality because limitations to size and shape of pattern on faced are relaxed when compared to grinded facets.

Many research groups have demonstrated that imprint technique can be used to fabricate micro- and nano-optical features on a semiconductor wafer.

### Summary of the Invention

An aim of the present invention is to provide a cost effective method to use imprint technique to fabricate micro- and/or nano-optical features on a facet of an optical element thus opening lot of new applications. The invention is based on the idea that a stamp is used to transfer a pattern to a transfer material that is on a facet of an optical element or directly to the optical element itself. To put it more precisely, the method according to the present invention is primarily characterised in that imprinting technique is used in forming the micro- and/or nano-optical features on a facet of an optical element.

According to a first aspect of the invention there is provided a method for producing a micro- and/or nano-optical pattern on an optical element, characterised in that the method comprises:
- heating the optical element;
- pressing an imprint stamp having a surface pattern on a facet of the optical element to form a negative pattern of the surface pattern of the imprinting stamp on the facet of the optical element; and
- separating the imprint stamp from the facet of the optical element.

According to a second aspect of the invention there is provided an optical element comprising an optical field modifying element at a facet of the optical element, characterised in that the optical field modifying element comprises a micro- and/or nano-pattern which is imprinted on the facet of the optical element.

The present invention provides advantages over prior art. By using the present invention it is possible to imprint micro- and nano-patterns to facets of an optical element with less costs than in prior art. It is also easier to repetitively produce such patterns on the optical elements using the same imprinting stamp. Further, in some implementations the imprinting stamp can comprise an imprinting pattern for a number of optical elements. Therefore, it is possible to substantially simultaneously imprint the optical pattern to a number of optical elements thus increasing the production speed.

By utilising the present invention it is possible to produce diffractive element, lens, metal relief or artificial material to an optical element. For example, grids and other surface patterns can be made on a facet of a optical fiber or a LED. It is also possible to form a so called "moth eye pattern" to reduce reflections.

### Description of the Drawings

- Figs. 1a-1c: depict a imprinting method according to a first example embodiment of the present invention,
- Figs. 2a-2c: depict a imprinting method according to a second example embodiment of the present invention,
- Figs. 3a-3f: depict a imprinting method according to a first third embodiment of the present invention,
- Figs. 4a-4f: depict a imprinting method according to a fourth example embodiment of the present invention, and
- Fig. 5: depicts an example of a facet of a fibre imprinted using a method according to the present invention,

### Detailed Description of the Invention

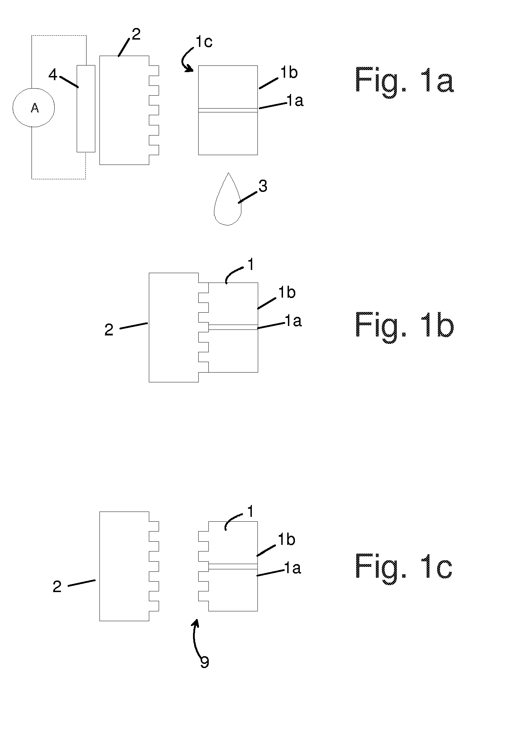

In the following a imprinting method according to a first example embodiment of the present invention is disclosed with reference to figs. 1a-1c. The optical element 1 in this example embodiment is a fibre but it is obvious that the invention can also be implemented with other kind of optical elements. The fibre 1 has at least a core 1a and a cladding layer 1b. The core 1a transfers the optical signal in the fibre i.e. from one end of the fibre 1 to another end of the fibre 1. Optical field propagates primarily in the core of the fiber or waveguide. One solution to improve the coupling of the light in the core of the fibre or waveguide is to form an optical field modifying element 9 at an end or a side facet. The surface pattern of the optical field modifying element 9 can be designed so that the wanted effect is achieved as well as possible. In some implementations the surface pattern of the optical field modifying element 9 may be very complex. When the surface pattern is designed e.g. by using a computer program. The designed surface pattern can be transferred to a mould (not shown) by some method known to an expert in the field. The stamp 2 can then be produced by using the mould. It is also possible to produce the stamp directly without using the mould. For example, the surface pattern can be formed directly on the surface of the stamp 2. The stamp 2 may comprise one or more surface patterns. If the stamp 2 comprises more than one surface pattern, the stamp 2 can be used to pattern more than one optical element 1 at one time.

In the following, the production of the optical field modifying element 9 at the end of the fibre 1 is described in more detail. The end of the fibre 1 and the stamp 2 are heated as is depicted with reference 3 in Fig 1 a. The end of the fibre 1 should be heated to a high enough temperature so that it becomes softer. For example, a polymer fibre made of poly(methyl methacrylate) (PMMA) the temperature should be greater than 105°C and for silica fibres grater than 1400°C. Heating of the fibre 1 can be made, for example, using a gas torch or a resistive heater. The stamp 2 can be heated, for example, with an infra-red radiation or a resistive heater 4. When the stamp 2 and the end of the fibre 1 have reached the desired temperature, the stamp 2 and the fibre 1 are brought into contact as is depicted in Fig 1b. The pattern in the stamp is replicated to the soft optical element. After that both the stamp 2 and the fibre 1 are cooled and separated (Fig 1c). As the fibre 1 is cooled it does no longer change its shape and the negative of the pattern of the stamp 2 is replicated to fibre facet 1c.

The alignment of the optical element 1 with the imprinting stamp 2 may be an important issue when the pattern to be produced on the facet of the optical element 1 is location specific. Therefore, a guidance element, alignment using microscope or measurement of the optical signal produced by launching light from the optical element through the transparent stamp and collecting modified beam to a detector and analyzing modified beam in order to detect when misalignment in minimized can be used to align the optical element 1 so that the stamp imprints the pattern at a correct location. However, some patterns may not be location dependent. Hence, the alignment is not so important issue and less efforts are required to produce a proper pattern on the optical element.

Heating may also be performed in such a way that the speed of the heating of the optical element 1 is different from the heating of the stamp 2. It is also possible to make the speed of the heating different in different embodiments. For example, the material of the optical element 1 and the material of the stamp 2 may affect to the speed of the heating and/or to the desired temperature of the optical element 1 and/or the stamp 2 at the stage when the stamp 2 is pressed against the fibre facet 1c.

The above mentioned procedure can easily be repeated to produce optical field modifying element at facets 1c of a multitude of optical elements 1. The facet can also be tilted such as an angle cleaved optical fibre or have some other non-flat shape such as a curved lens.

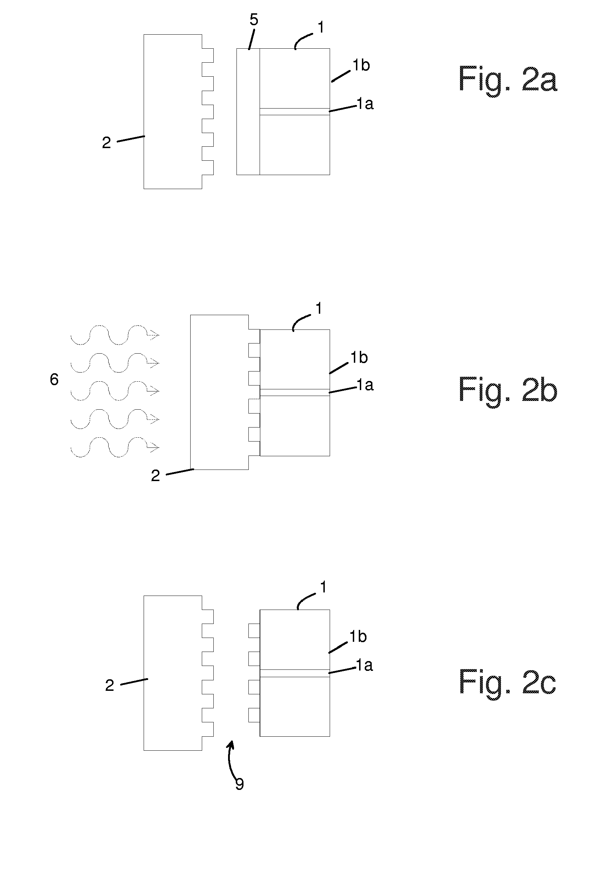

In the second example embodiment of the present invention micro- and nano-optical features are imprinted to polymer layer 5 or some other layer that is soft or can be made soft by treating layer with heat on a facet of the optical element 1c. This is depicted in Figs. 2a-2c. A first layer 5 is deposited on a facet 1c as is depicted in Fig 2a. This can be done, for example, by evaporating, spraying or injecting layer on the facet 1c or by dipping the facet to a liquid. After the deposition of the layer the stamp 2 is pressed against the layer 5 and the layer is treated with UV-light and/or heating 6 (Fig 2b). After the layer is treated the stamp 2 is separated and the negative of the pattern of the stamp 2 is produced on the layer 7a on top of the facet 1c (Fig 2c). This patterned layer is the optical field modifying element.

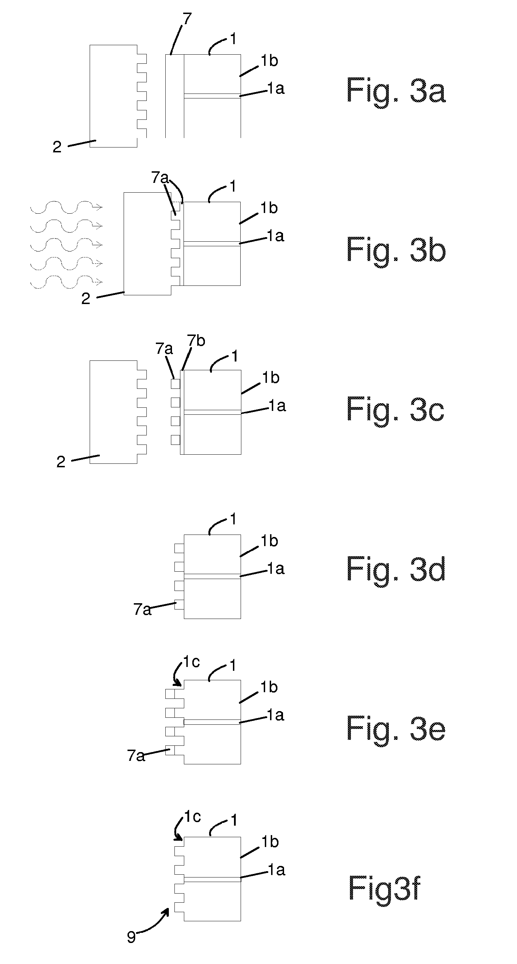

In the third example embodiment of the present invention, disclosed in Figs. 3a-3f, printing and etching processes are used to produce desired micro- and nano-optical features at a facet of the optical element 1c. First, a first polymer or some other layer that is soft or can be made soft by treating layer with heat layer 7 is deposited on a facet (Fig 3a). This can be done, for example, by evaporating, spraying or injecting layer on the facet 1c or by dipping the facet to a liquid. The layer 7 is used as an etching mask. After that the stamp 2 is pressed against the layer 7 and the layer 7 is treated with UV-light and/or heating (Fig 3b). After the layer 7 is treated the stamp 2 and the fibre 1 are separated and the negative of the pattern of the stamp 2 is produced on the layer 7a on fop of fibre facet 1c (Fig 3c). Usually, at this stage there is a small residual 7b of the layer 7 left at areas where the etching is desired (Fig. 3c). This residual 7b of the layer 7 can be removed by using e.g. plasma etching (Fig 3d). When the residual 7b of the layer 7 is removed the desired pattern can be transferred to the facet 1c using either wet or dry etching (Fig 3e). As the last process step of this embodiment the imprinted layer 7a is removed and the optical element 1 is cleaned (Fig 3f).

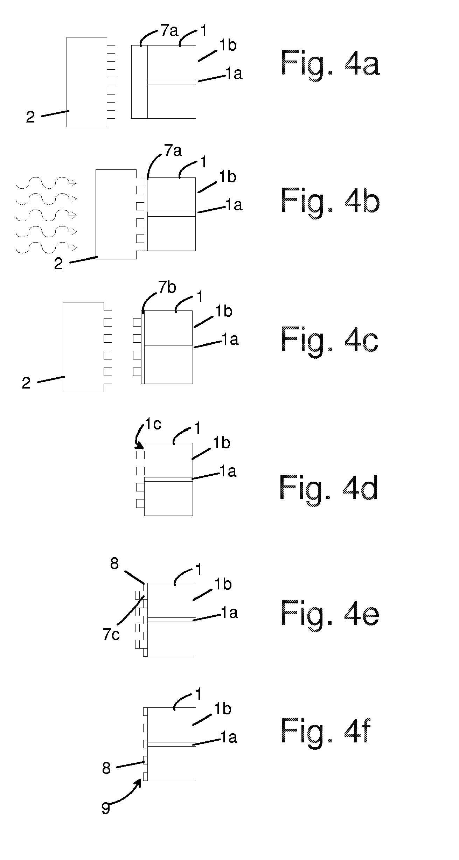

In the fourth example embodiment of the present invention, depicted in Figs. 4a-4f, imprinting, deposition and lift off-processes are used to produce desired micro- and nano-optical features on the facet of the optical element 1c. First, a first polymer layer 7 or some other layer that is soft or can be made soft by treating layer with heat is deposited on a facet (Fig 4a). This can be done for example evaporating, spraying, injecting drop of liquid on a facet or by dipping facet to liquid. After that the stamp 2 is pressed against the layer 7 and the layer 7 is treated with UV-light and/or heat (Fig 4b). After the layer 7 is treated the stamp 2 and the fibre 1 are separated from each other and the negative of the pattern of the stamp 2 is produced on the layer 7a on top of the facet 1c (Fig 4c). Usually, at this stage there is a small residual 7b of the layer 7 left at areas where the deposition material is wanted to be deposited. This residual 7b of the layer 7a can be removed by using e.g. plasma etching (Fig 4d). When the residual layer 7b is removed a layer 8 is deposited on the facet 1c preferably using vacuum evaporation (Fig 4e). The layer 7c under the deposited layer 8 can be dissolved in solvent or etched with acid or base, depending nature of material chosen, thus leaving only positive image of the pattern of the stamp 2 on the deposited layer (Fig 4f).

In addition to the embodiments 1-4 it is possible to use more complicated processes or processes combining embodiments 1-4. Such processes can be multi-layer lift-off or etching processes, or etching using etch mask fabricated by lift-off process.

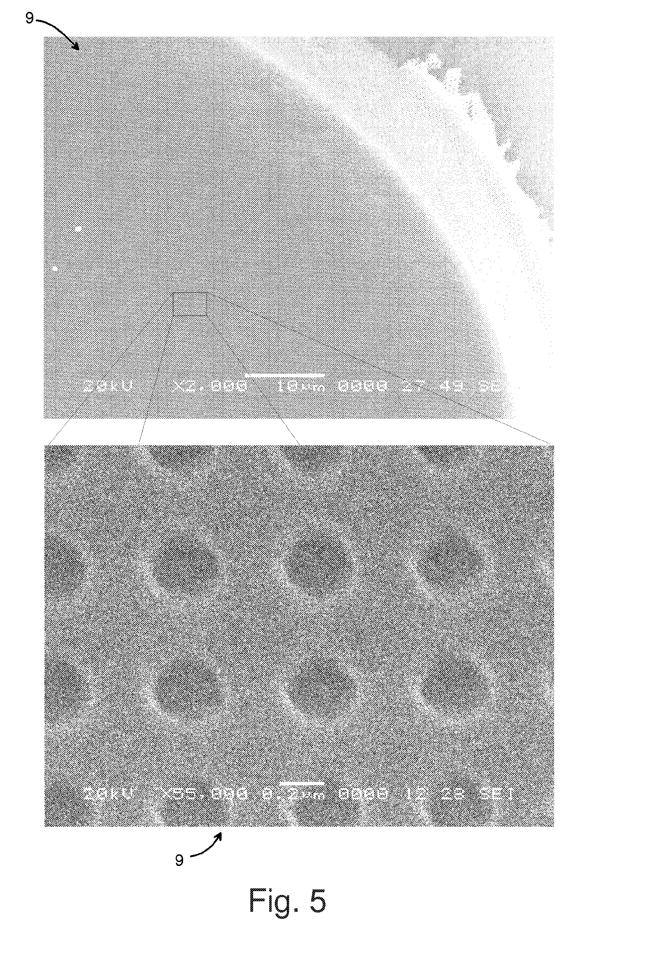

Figure 5 shows an example of a pattern fabricated with the second example embodiment process illustrated in figures 2a - 2c. In this example the hole diameter is about 250nm but it is obvious that the invention is not limited to such diameters or shapes only. Further, the patterns produced on the fibre facets 1c can be different from the pattern disclosed in Fig. 5.

As was mentioned above in the description, the invention can also be used to produce desired micro- and nano-optical features on other optical elements than fibres. For example, a pattern can be produced on the protective cover of a LED to affect the optical properties of the LED.

The method according to the present invention can also be used to produce surface patterns on waveguides e.g. on or in a printed circuit board to improve the connectivity of light from e.g. an optical transmitter into the waveguide and, on the other hand, to improve the connectivity of light from the waveguide to e.g. an optical receiver.

In addition to form the optical patterns at the end facet of the optical element 1, the optical patterns can also be formed at a side of the optical element 1.

## Claims

1. A method for producing an optical field modifying element (9) having a micro- and/or nano-optical pattern on an optical element (1) **characterised in that** imprinting technique is used in forming the micro- and/or nano-optical features on a facet of the optical element.

2. The method according to claim 1 , **characterised in that** it comprises using at least one of the following as the optical element (1):
- an optical fibre;
- a waveguide.
- light emitting surface of a light emitting device

3. The method according to claim 1 or 2, **characterised in that** the method comprises:
- heating the optical element (1);
- pressing a patterned imprint stamp (2) on a facet (1c) of the optical element (1) to form a negative pattern of the imprinting stamp (2) on the facet (1c) of the optical element (1); and
- separating the imprint stamp (2) from the facet (1c) of the optical element (1).

4. The method according to claim 3, **characterised in that** the method comprises:
- using a first heating temperature for heating the imprint stamp (2); and
- using a second heating temperature for heating the facet of the optical element (1).

5. The method according to claim 4, **characterised in that** the method comprises:
- using a first heating speed for heating the imprint stamp (2); and
- using a second heating speed for heating the facet of the optical element (1).

6. The method according to claim 3, 4 or 5, **characterised in that** the method comprises:
- forming a layer (7a) on the facet (1c) of the optical element (1) before pressing the imprint stamp (2) on the facet (1c) of the optical element (1); and
- treating the layer (7a) before separating the imprint stamp (2) and the optical element (1).

7. The method according to claim 6, **characterised in that** the treating is performed either by light or by a heating the layer (7a).

8. The method according to claim 6 or 7, **characterised in that** the method comprises:
- removing a residual part (7b) of the layer (7a) from the facet (1c) of the optical element (1) after separation of the imprint stamp (2) from the facet (1c) of the optical element (1); and
- using the layer (7a) remaining on the facet (1 c) of the optical element (1) as an etching mask.

9. The method according to claim 7 or 8, **characterised in that** the method comprises:
- removing a residual part (7b) of the layer (7a) from the facet (1c) of the optical element (1) after separation of the imprint stamp (2) from the facet (1c) of the optical element (1), the surface pattern of the imprint stamp (2) defining areas on which a layer (8) is to be formed;
- depositing a layer (8) at least on such parts of the facet (1c) of the optical element (1) from which the layer (7a) is removed; and
- removing the rest of the layer (7a) from the facet (1c) of the optical element (1) leaving a part of the deposition layer (8) on the facet (1c).

10. An optical element (1) comprising an optical field modifying element (9) at a facet (1c) of the optical element (1), **characterised in that** the optical field modifying element (9) comprises a micro- and/or nano-optical pattern which is imprinted on the facet (1 c) of the optical element (1).

11. The optical element (1) according to claim 10, **characterised in that** it is one of the following:
- an optical fibre;
- a waveguide.
- light emitting surface of a light emitting device
